# EUROPÄISCHE PATENTANMELDUNG

(11) **EP 4 033 860 A1**
(43) Veröffentlichungstag der Anmeldung: **27.07.2022**
(21) Anmeldenummer: 22157053.4
(22) Anmeldetag: 22.12.2017
(51) Int. Cl.: H05B 6/10

(54) **ROTATIONS-INDUKTIONSHEIZUNG MIT GLEICHSTROMERREGUNG**

(30) Priorität: 22.12.2016 DE 102016125500
(62) Teilanmeldung aus: 17822328.5
(71) Anmelder: Seiwald, Andreas, 6306 Söll (AT)
(72) Erfinder: Seiwald, Andreas, 6306 SÖLL (AT)
(74) Vertreter: Eisenführ Speiser

(57) **Zusammenfassung**

Die Erfindung betrifft eine Rotations- Induktionsheizung mit Gleichstromerregung zum Erwärmen von festen oder flüssigen oder gasförmigen Stoffen, dadurch gekennzeichnet, dass ein mit einer Gleichstromspule ein magnetisches Gleichfeld erzeugt wird und dieses magnetische Gleichfeld über ein rotierendes mechanisches Bauteil in ein magnetisches Wechselfeld umgewandelt wird, wobei die Rotations-Induktionsheizung einen Magnetring mit einer Gleichstromspule zur Erzeugung des magnetischen Gleichfeldes aufweist, wobei der Magnetring fest stehend mit dem Gehäuse der Rotations- Induktionsheizung verbunden ist, wobei sich an den Magnetring in axialer Richtung ein rotierbares Polrad anschließt, wobei das Polrad einen inneren Polring und einen äußeren Polring aufweist, und dass in axialer Richtung sich an das Polrad ein fest stehendes Bauteil, nämlich ein Induktionsring anschließt und wobei zwischen dem Magnetring und dem Polrad das magnetisches Gleichfeld ausgebildet und zwischen Polrad und dem Induktionsring das magnetische Wechselfeld zum Erzeugen von induktiver Wärme ausgebildet ist.

## Beschreibung

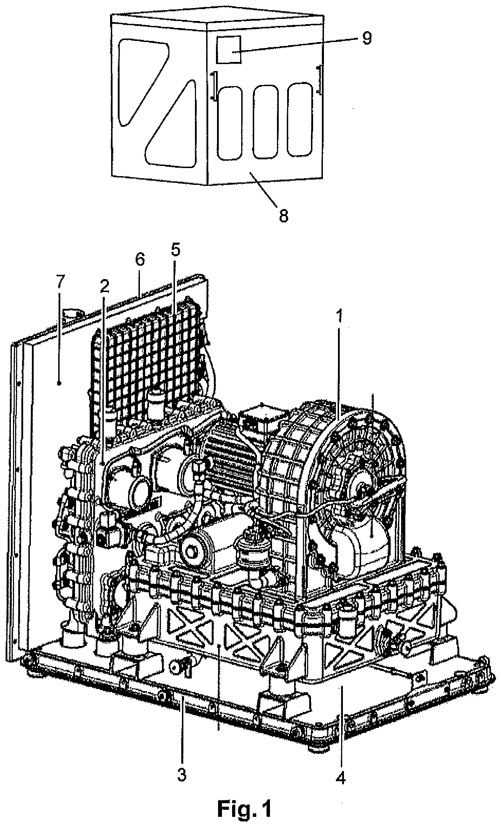

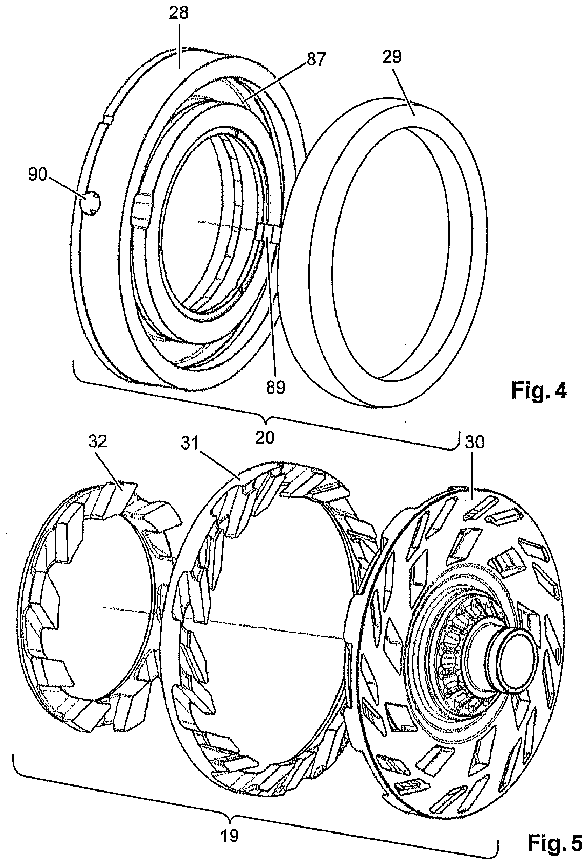

Die Erfindung betrifft ein Heizsystem (siehe z.B. Fig. 1 Pos. 1 - 9), bei dem die thermische Energie mittels magnetischer Induktion in Form von Wirbelströme über eine Gleichstromerregung und mechanischer Vorrichtung (siehe z.B. Fig. 5 Pos. 30 - 32) zum Generieren des magnetischen Wechselfeldes erzeugt wird. Das Heizsystem ist einsetzbar zur Warmwassererzeugung von Heizungen jeder Art sowie zur Brauchwassererwärmung.

Wirbelströme sind Kurzschlussströme die, die elektrische Energie in einem elektrischen Leiter in thermische Energie umwandeln. Abgesehen von geringen Konvektionsverlusten wird diese Energie zu 100% in ein festes, flüssiges (bevorzugt ist Öl) oder gasförmiges Wärmeträgermedium, übergeleitet.

Es gibt bereits bekannte Heizsysteme, bei denen mit Wirbelströmen thermische Energie erzeugt wird. Einige davon sind z. B. Induktionsöfen oder Induktionskochfelder.

Die thermische Energie wird hier ausschließlich im zu erwärmenden Medium erzeugt. Das Medium bildet die magnetische bzw. elektrisch leitende Brücke zum Heizgerät, wo in Folge Wirbelströme das Medium erhitzen. Im Heizgerät selbst werden nur geringfügige Hysterese- und Wirbelstromverluste verzeichnet.

Damit genannte Systeme funktionieren können, müssen die Erregerspulen mit Wechselstrom (bzw. Wechselspannung) beaufschlagt werden.

Dieser Wechselstrom erzeugt ein magnetisches Wechselfeld in den Spulen, wobei induktive Ströme generiert werden und die nach dem bekannten Induktionsgesetz dem angelegten Strom entgegenwirken.

Dazu sind bestimmte technische Maßnahmen notwendig, wie Magnetkerne aus dünnen geschichteten und isolierten Blechen mit schlechter elektrischer Leitfähigkeit oder Ferritkerne mit hohem elektrischen Widerstand gegen Wirbelströme, sowie Spulen mit niedriger Windungszahl und kleinem ohm'schen Widerstand gegen induktiven Blindwiderstand. Auf die exakte Wirkungsweise von Wechselstromspulen wird hier nicht näher eingegangen, die stehen nicht in Relation zur eigentlichen Erfindung.

Neben vorhin beschriebenen Heizsystemen sind in dem Wirbelstrombremsen zu nennen, die erzeugen ebenso thermische Energie im Bereich, Wirbelströme generiert werden. Auch hier zeigt sich dasselbe Problem. Wirbelstrombremsen werden zwar mit Gleichstrom betrieben und haben einen hohen elektrischen Effizienzgrad, benötigen aber eine äquivalente kinetische Energie zum Erzeugen der thermischen Energie bzw. um das System in Bewegung zu halten.

Das bedeutet bei allen genannten Systemen ist die einzubringende elektrische oder/und kinetische Energie höher derart als die nutzbare Wärmeenergie. Diese Heizsysteme lassen keine Energieersparnis zu und sind zur Wärmeerzeugung im Heizungs- und Brauchwasserbereich wenig bzw. nicht geeignet.

Als Stand der Technik wird hingewiesen auf DE 2620236 A1, DE 2647741 A1, FR 2864369 A1, WO 2008028673 A1, EP 0 071 046, US 2014/0231414, DE31 29 817, US-A-4,423,344, sowie EP-A2-0 062 706. Die bekannten Systeme haben sich bislang auf Grund ihres zu geringen Wirkungsgrads nicht durchgesetzt und auch auf Grund des nachteiligen strukturellen Aufbaus aus sind die Systeme regelmäßig nur für relativ kleine Leistungen ausgelegt, insbesondere für die Anwendung in Fahrzeugen, als Fahrzeugheizung.

Als weiterer Stand der Technik wird hingewiesen auf WO 2011/125485, US 2014/0110938 sowie US-A-3,014,116. In WO 2011/125485 ist eine Induktionsheizeinrichtung und ein elektrisches Generatorsystem, welches die Induktionseinrichtung aufweist, offenbart. In US 2014/0110938 ist eine Induktionsheizeinrichtung und ein elektrisches Leistungsgeneratorsystem offenbart. US-A-3,014,116 offenbart eine magnetische Heizeinrichtung.

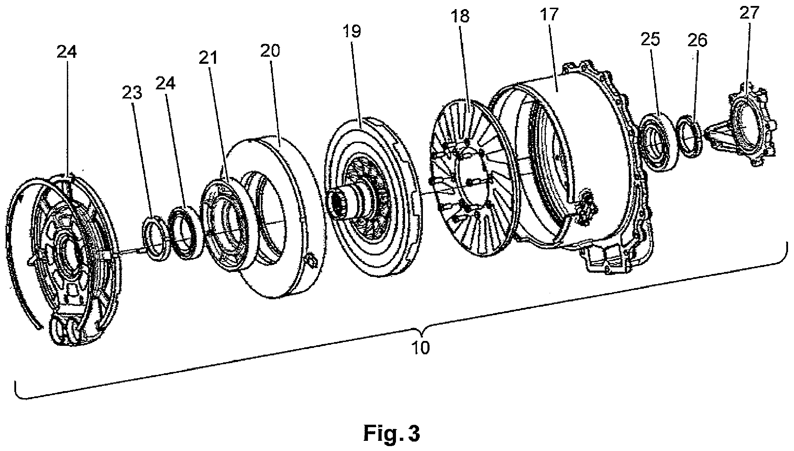

Aufgabe der Erfindung ist es, Nachteile dieser bekannten Wärmeerzeuger zu vermeiden und ein Heizsystem (Fig. 3 Pos. 17 - 27) mit wesentlich höherer Energieeffizienz und somit einen deutlich besseren Wirkungsgrad zur Verfügung zu stellen, auch ein Heizsystem mit mehr als 10, vorzugsweise mehr als 20 oder 50 kW oder 100-500kW Leistung.

Die Aufgabe wird erfindungsgemäß gelöst durch eine Rotations-Induktionsheizung gemäß Anspruch 1, vorteilhafte Weiterbildungen sind in den Unteransprüchen beschrieben.

Die Erfindung beruht auf der Erkenntnis, dass nicht dass, zur Induktion erforderliche magnetische Wechselfeld über eine Erregerspule mittels Wechselstrom, sondern mittels Gleichstrom erzeugt wird, wobei die Erregerspule bevorzugt nicht rotiert, sondern statisch fest steht.

Gleichstromspulen weisen einen ums vielfache niedrigeren induktiven Blindwiderstand als Wechselstromspulen auf. Das erlaubt den niedrigen Erregerstrom und viele Windungen. Daraus resultiert, dass das magnetische Potential (Vektorpotential) äquivalent zu Strom x Windungen ist. Hoher Erregerstrom und wenige Windungen, z. B. 100 A x 1 N = 100 AW oder niedriger Erregerstrom und viele Windungen z. B. 1 A x 100 N = 100 AW, ist dieselbe Größe. Weil das magnetische Gleichfeld keine Induktion generiert, ist die Erfindung nachstehend beschrieben.

Die Figuren zeigen ein mögliches Ausführungsbeispiel der Erfindung und zeigen hierbei:
- Fig 1.: Aufsicht auf eine erfindungsgemäße Rotations- Induktionsheizung mit einer davon abgesetzten Haube zur Wärme- und Schalldämmung,
- Fig. 2: Eine Explosionsdarstellung wesentlicher Teile des erfindungsgemäßen Rotations- Induktionsheizgerätes nach Fig. 1,
- Fig. 3: Eine Explosionsdarstellung des erfindungsgemäßen Heizgerätes,
- Fig. 4: Eine Explosionsdarstellung des Magnetrings einerseits und der Gleichstromspule andererseits,
- Fig. 5: Eine Explosionsdarstellung eines Polrads, bestehend aus innerem Polring, äußerem Polring und Polringträger,
- Fig. 6: Verschiedene Seitenansichten eines zusammengesetzten Polrads,
- Fig. 7: Explosionsdarstellung eines Induktionsringes,
- Fig. 8: Aufsicht und Schnittdarstellung durch ein erfindungsgemäßes Heizgerät,
- Fig. 9: Projektionsdarstellung und Konturführung des Induktionsringes (durchgezogene Linien), bezogen auf die Berührung des Polrades (gestrichelte Linien),
- Fig. 10: Explosionsdarstellung des Magnetringes mit Gleichstromspule, Polrad und Induktionsring,
- Fig. 11: Explosionsdarstellung der Mischbox gemäß Figur 1,
- Fig. 12: Explosionsdarstellung eines Induktionsringes mit idealem Magnetfluss,
- Fig. 13: Darstellung eines Drehmoment-/Bremsmomentdiagramms,
- Fig. 14: Darstellung eines alternativen Drehmoment/Bremsmomentdiagramms zu Figur 13,
- Fig. 15: Explosionsdarstellung eines Planetengetriebes,
- Fig. 16: Schnittdarstellung durch ein Rückschlagventil.

Figur 1 zeigt einen grundsätzlichen Aufbau der erfindungsgemäßen Heizeinrichtung 1 und einen daran angeschlossenen Wärmetauscher, eine Mischbox 2 für die Warm-/Kaltwasseraufbereitung. Wie in Figur 1 zu sehen, werden dabei alle Teile der Einrichtung von einem Grundrahmen 3 aufgenommen. Dieser Grundrahmen weist eine Wärme-und Schalldämmmatte 4 auf und die wie in Figur 1 dargestellte Einrichtung kann eine Wärme- und Schalldämmhaube übergestülpt werden, wobei die Haube Anzeige- und Bedienelement 9 aufweist und die Haube als solche auch abnehmbare oder zu öffnende Tür aufweist. Wie in Figur 1 ferner zu erkennen weist das Heizgerät rückseitig eine Rückwand 6 auf, welche ebenfalls mit einer Wärme- und Schalldämmmatte an der Rückwand versehen ist und auch weist das Gerät eine Steuerelektronik 5 auf.

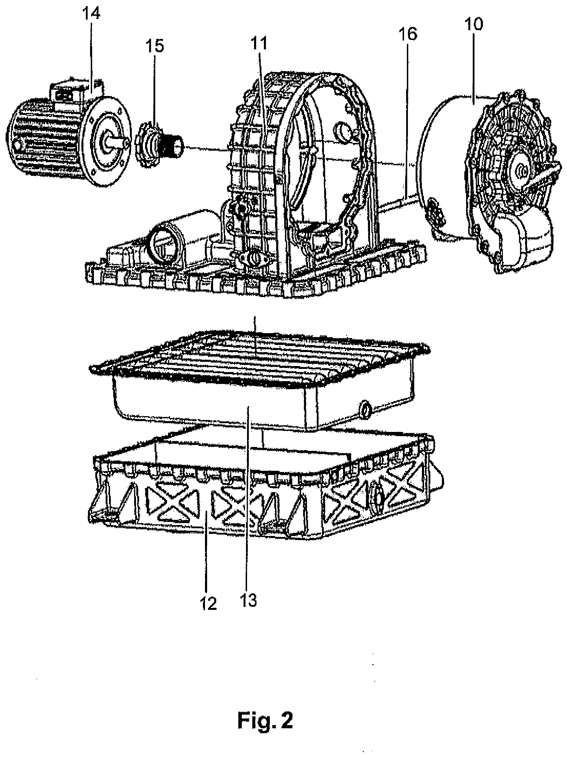

Figur 2 zeigt eine Explosionsdarstellung einiger Teile der erfindungsgemäßen Heizeinrichtung nach Figur 1. Die Figur zeigt dabei ein unteres Wärmetauschergehäuse 12, ein ÖI-Wassertrenner 13, oberes Wärmetauschergehäuse 11, ein Heizgerät 10, einen Regler für Öl-, Einspritzvolumen 16, einen Startmotor 14 als typischen Antrieb, sowie eine Kupplung zur Verbindung von Heizgerät 10 und Startmotor 14.

Figur 3 zeigt in der Explosionsdarstellung Einzelheiten des Heizgeräts 10 von einem dargestellten Bild bestehend aus (von links nach rechts) einer Ölpumpe 24, einem Stützlager 22, einer Spannmutter Stützlager 23, einer Stützlagernabe 21, und einem Magnetring mit Gleichstromspule 20 (feststehend), einem Polrad 19 (rotierend), einem Induktionsring 18 (feststehend), einem Gehäuse 17 des Heizgerätes 10, einem Führungslager 25 und einem Spannmutter Führungslager 26, sowie einem Frontdeckel 27.

Besondere Aufbaufunktionsweise des Magnetrings, des Polrades und des Induktionsringes 18 wie nachstehend erläutert.

Erfindungsgemäß wird die Gleichstromspule 29 in einem Magnetring 28 aufgenommen, ist hiermit vorzugsweise fest verbunden, wobei der Magnetring fest stehend mit dem Gehäuse 17 der Rotations- Induktionsheizung 1 verbunden ist und das von der Gleichstromspule erzeugte magnetische Gleichfeld wird über ein rotierendes mechanisches Bauteil, nämlich das Polrad 19 in ein magnetisches Wechselfeld 52 umgewandelt.

Erfindungsgemäß ist vorgesehen, dass der induzierende Teil, der Magnetring 28, aus einem im Querschnitt U-förmigen Ring gebildet ist und aus ferromagnetischem Werkstoff, bevorzugt ist Reineisen, besteht, wobei durch den U-förmigen Ring eine Nut 87 gebildet wird. In der Nut ist die Gleichstromspule 29 platziert, die ebenso ringförmig gebildet ist. Die Gleichstromspule weist eine z. B. gewickelte Spule auf, welche aus einem Blechband, aus einem Runddraht oder auch aus einem Rechteckdraht bestehen kann. Aufgrund des magnetischen Gleichfeldes kann der Magnetring 28 aus Massivmaterial, geschichtete Bleche oder Sintermetall bestehen. Der Magnetring weist eine innere und eine äußere nicht unterbrochene plane Fläche (Fig. 4 Pos. 28) auf, wo das Magnetfeld abwechselnd z. B. als Südpol und als Gegenpol z. B. Nordpol, austritt und in baugleiche Flächen vom benachbarten Polrad (Fig. 5 Pos. 30 - 32) wieder eintritt. Erfinderisch ist alternativ auch denkbar in den Magnetring statt der Gleichstromspule einen Dauermagneten zur Magnetisierung einzusetzen. Nachteil von Dauermagneten sind möglicherweise hohe Herstellungskosten, niedrige Curie-Temperatur und aufwendige Regeltechnik der Heizleistung.

Figur 4 wird auch ein Stromversorgungsanschluss 89 der Gleichstromspule 29 gezeigt, welcher durch eine Öffnung 90 im Magnetring 28 nach außen geführt wird, um somit einen Stromanschluss zu ermöglichen.

Um das Gleichfeld in ein zur Induktion erforderliches Wechselfeld zu wandeln sieht die Erfindung ein mechanisches Bauteil, das Polrad (Fig. 5 Pos. 30 - 32), vor. Rotiert das Polrad am statischen (also fest stehenden) Magnetring vorbei ist diese Voraussetzung erfüllt.

Das Polrad besteht bevorzugt aus mehreren Komponenten, z. B. einem inneren Polring (Fig. 5 Pos. 32), einen äußeren Polring (Fig. 5 Pos. 31) aus ferromagnetischem Material, bevorzugt aus Reineisen und dem Polringträger (Fig. 5 Pos. 30) aus z. B. antimagnetischem Werkstoff z.B. Edelstahl oder Kunststoff. Die Polringe können aus Massivmaterial, geschichteten Blechen oder Ferrit bestehen.

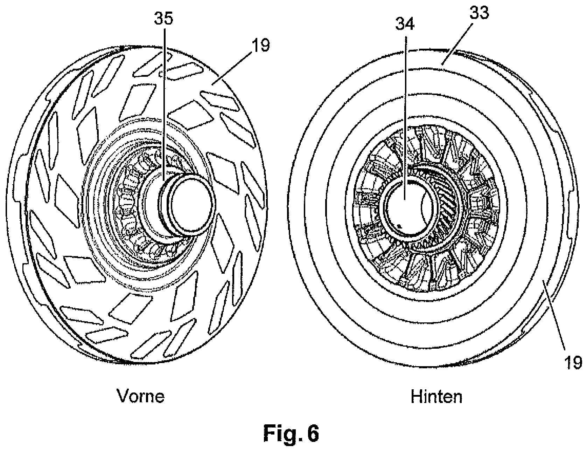

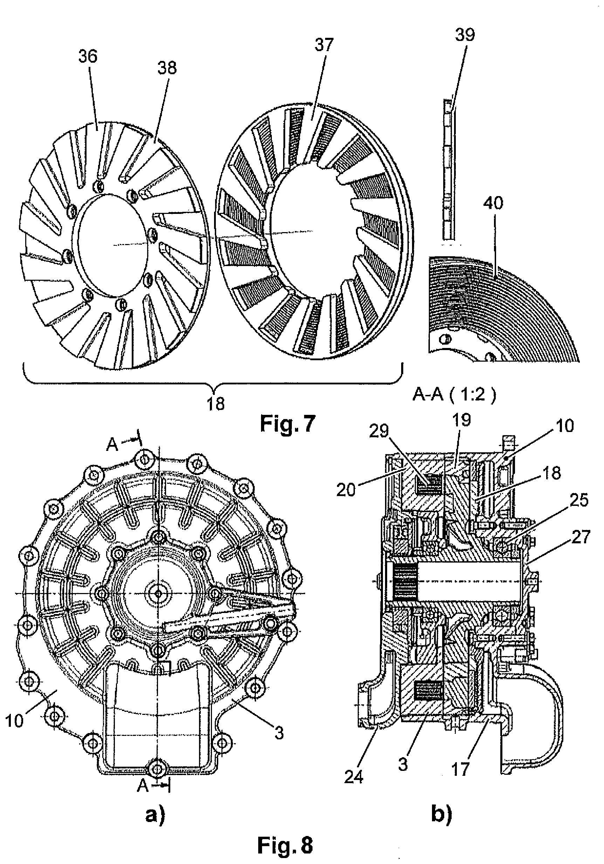

Funktionsbedingt wird über einen möglichst kleinen Luftspalt das magnetische Gleichfeld vom Magnetring (Fig. 4 Pos. 28) zum Polrad (Fig. 6 Pos. 33) in ein magnetisches Wechselfeld vom Polrad zum z. B. durch Schrauben festgesetzten, fest sitzenden (stehenden) Induktionsring 18 (Fig. 7 Pos. 36 - 37) umgewandelt. Dabei spielt es keine Rolle, ob sich das Polrad zum Magnetring dynamisch oder starr verhält. Das magnetische Gleichfeld 51 wird verlustfrei, abgesehen von geringen Luftspaltverlusten, übertragen und bleibt auch im Polrad als Gleichfeld in dem, zum Magnetring näheren Bereich erhalten. Die Wechselfeldseite 52 unterliegt den Gesetzen der Koerzitivkraft bzw. Ummagnetisierungsverlusten, dem Skin Effekt, oder Wirbelstromverluste bei Massivmaterial.

Dazu sind folgende konstruktive Maßnahmen an den Polringen vorgesehen. Auf der, dem Induktionsring zugekehrten Seite sind mindestens zwei oder mehrere Polfortsätze (Fig. 5 Pos. 31 und 32) angeordnet, die entweder im Winkel versetzten oder parallel verlaufenden Kanten ausgebildet sein können. Die Gestaltung der Polfortsätze unterliegt keiner bestimmten Regel, wobei die Gestaltungsform der Polausprägung das magnetische Potential hinsichtlich Antreiben und Bremsen maßgeblich beeinflusst. Auch ist es denkbar eine unsymmetrische Polanzahl zwischen Innenring und Außenring zu wählen. Damit die Polringe in Position gehalten werden, ist ein Trägerwerkstoff (Fig. 5 Pos. 30) vorgesehen, der zudem die beidseitige Aufnahme der Lagerung (Fig. 6 Pos. 35) oder einseitig ein Zahnrad (Fig. 6 Pos. 34), bevorzugt für ein Planetengetriebe, bildet. Der Polringträger hat für die erforderliche Steifigkeit zur Aufnahme aller, auf die Polringe einwirkenden magnetischen Kräfte zu sorgen.

Vorteilhafter Weise besteht der Polringträger (Fig. 5 Pos. 30) aus unmagnetischen Werkstoff, kann aber als elektrisch leitend oder elektrisch isolierend ausgeführt sein. Das gilt auch für die Polringe (Fig. 5 Pos. 31 und 32), die, wie der Polringträger als elektrisch leitend oder nichtleitend ausgeführt sein können.

Das hängt vom jeweiligen gewollten thermischen Leistungspotential ab. Bei elektrisch leitenden Materialien und Massivbauteilen werden ebenso wie im Induktionsring auch im Polrad Wirbelströme induziert, die, die Heizleistung erheblich erhöhen.

Der Induktionsring (Fig. 7 Pos. 36) unterliegt einer ähnlichen Strukturierung wie die Polringe. Auch hier sind Vertiefungen in Form von Taschen gebildet, die eine homogene Ausprägung des Magnetfeldes verhindern. Je homogener das Magnetfeld im Induktionsring geprägt ist, umso höher ist die Tendenz zum Bremsen.

Um die Wirbelstromintensität zu verstärken, sind die Taschen (Fig. 7 Pos. 38) im Induktionsring mit einem guten elektrisch- und wärmeleitfähigen Material (Fig. 7 Pos. 37) gefüllt. Zudem ist auf der den Polen abgewandten Seite eine Schicht (Fig. 7 Pos. 39) aus demselben Material aufgebracht ist. Die Stärke dieser Schicht (s = var.) unterliegt keiner bestimmten Vorgabe. Je besser die Leitfähigkeit des Materials und je dicker die Schicht, umso höher auch die Wirbelstromausprägung im Material infolge der thermischen Energieeffizienz.

Zudem ist die aufgebrachte Schicht durch Profilierung der Oberfläche (Fig. 7 Pos. 40) auf der dem Wärmeträgermedium zugewandte Seite dementsprechend vergrößert und dadurch die Konvektion vom Metall zum Wärmeträgermedium wesentlich verbessert. Es ist auch denkbar, den Induktionsring ohne Füllmaterial zu bilden. Das bewirkt zwar eine Verschlechterung der Heizleistung bei gleicher primärerer Energieaufwendung, beeinflusst aber nicht die Funktion an sich.

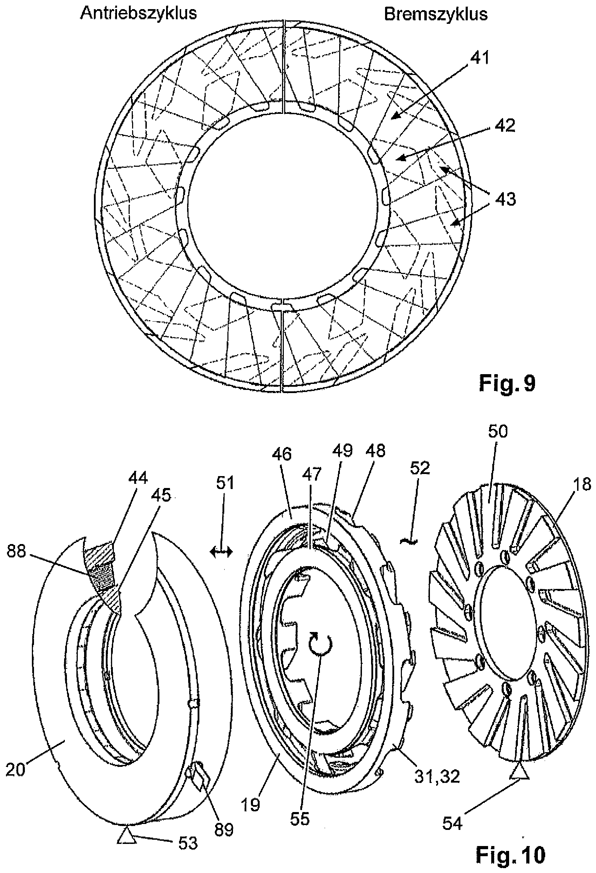

Figur 9 zeigt eine achsiale Projektionsdarstellung der Kontur der äußeren (axialen) Konturen und deren Vorsprünge des Induktionsringes (durchgezogene Linien) und des Polrads (gestrichelte Linien).

In Figur 8 ist in der Außenansicht und eine Schnittdarstellung durch ein erfindungsgemäßes Heizgerät 10 gezeigt. Insbesondere die Darstellung in Figur 8b zeigt den kompakten Aufbau der erfindungsgemäßen Heizeinrichtung.

Figur 10 zeigt eine Nebeneinander-Ordnung zur Darstellung des Magnetflusses im Magnetraum, das Polrad 19, den Magnetring 20 mit Gleichstromspule 29, 88, sowie Induktionsring 18.

Bei der erfindungsgemäßen Rotations- Induktionsheizeinrichtung mit Gleichstromerreger ist ein Magnetring mit Gleichstromspule 20, sowie der Induktionsring 18 statisch, das heißt im Maschinenkörper fest angeordnet, während hingegen das Polrad als dynamisches Teil eine Rotationsbewegung ausführen kann.

Zwischen dem Magnetring 20 und der Gleichstromspule 88 einerseits und dem Polrad 19 ist dabei eine magnetische Gleichfeldzone 51 ausgebildet, während zwischen Polrad 19 und dem Induktionsring 18 eine magnetische Wechselfeldzone 52 ausgebildet ist.

In Figur 10 ist die Gleichstromspule 29 als Blechband (Aufwicklung) 88 erkennbar, mit den entsprechenden Stromanschlüssen 89.

Die eigentliche Systemwirkung ist gegeben, wenn sich grundsätzliche konträre Merkmale, nämlich Antreiben und Bremsen des Polrades, einander ergänzen. Die Anzahl der Antriebs- und Bremszyklen pro Umdrehung bestimmt die Anzahl der Polfortsätze vom Polrad (Fig. 6) und Taschenanzahl im Induktionsring (Fig. 7). Die Kanten der Polfortsätze der Polringe (Fig. 5 Pos. 31 und 32) stehen bevorzugt konträr zu den Taschenkanten vom Induktionsring (Fig. 7 Pos. 36). Die Winkellage der jeweiligen Kanten zueinander bestimmt die Differenz zwischen Brems- und Antriebsmoment (die in Figur 9 dargestellte Winkellage der Polfortsetzung der Polringe einerseits und der Taschenkanten des Induktionsringes andererseits sind dabei besonders bevorzugt und sofern entspricht die zeichnerische Darstellung in Figur 9 auch dem konkreten erfindungsgemäßen Ausführungsbeispiel). Das Antriebsmoment wirkt solange bis sich das magnetische Moment zwischen den inneren- und äußeren Polflächen der Polringe zu den Polflächen vom Induktionsring neutralisiert (m = 0) (Fig. 9). Danach wirkt die Bremsenergie im umgekehrten Sinn. Die höchste Energieeffizienz herrscht, wenn beide Zyklen im zeitlichen und kinetischen Gleichgewicht (Δt ± Eₖᵢₙ = 0) sind. Schwindet das zeitliche Gleichgewicht in ein zeitliches und kinetisches Ungleichgewicht (Δt ± Eₖᵢₙ ≠ 0) Richtung Bremsmoment, mindert sich die Energieeffizienz, umgekehrt steigt die Energieeffizienz.

Idealerweise ist das Verhältnis zwischen Antreiben und Bremsen 1:1,03 zugunsten Bremsen. Der Bremsüberhang bewirkt, dass sich die volle Erregerleistung einstellen kann und somit die maximale Heizleistung abrufbar ist. Je größer die Differenz zwischen Bremsenergie und Antriebsenergie, umso schlechter ist die Energieeffizienz des Heizgerätes. Verständlicherweise muss dann mehr an externer Antriebsenergie dem System zugeführt werden, damit die Funktion aufrechterhalten bleibt.

Im Antriebszyklus wird zusätzliche kinetische Energie aus der Masseträgheit aller rotierenden Bauteile gewonnen, die die aktuelle Drehzahl aus der Antriebsenergie entsprechend erhöht. Die Rotationsenergie (bzw. die Trägheit der rotierenden Masse) wirkt permanent der Bremsenergie entgegen.

Überwiegt die Antriebsleistung die Bremsleistung inklusive der Verlustleistung (Lagerreibung und Luftzirkulationsverluste), beschleunigt das Polrad stetig bis über die kritische Drehzahl und das Heizgerät würde beschädigt. Deshalb ist die Erregerleistung solange zu reduzieren bis sich die Drehzahl auf das vorgegebene Maß einstellt. Daraus ergibt sich eine Größe der Heizleistung die sich äquivalent aus der Differenz Bremsleistung plus Verlustleistung zur Antriebsleistung verhält. Erfinderisch ist auch denkbar das Polrad zu bremsen und wiederum die daraus gewonnene Energie ins System rückzuführen. Dazu dient eine Zusatzeinrichtung, bei der das Wärmeträger-medium in den Luftspalt zwischen Polrad und Induktionsring eingespritzt und so mittels Reibwiderstand gebremst wird. Die eingespritzte Flüssigkeitsmenge lässt sich über einen dementsprechenden Regler (Fig. 2 Pos. 16) exakt dem Erfordernis abstimmen.

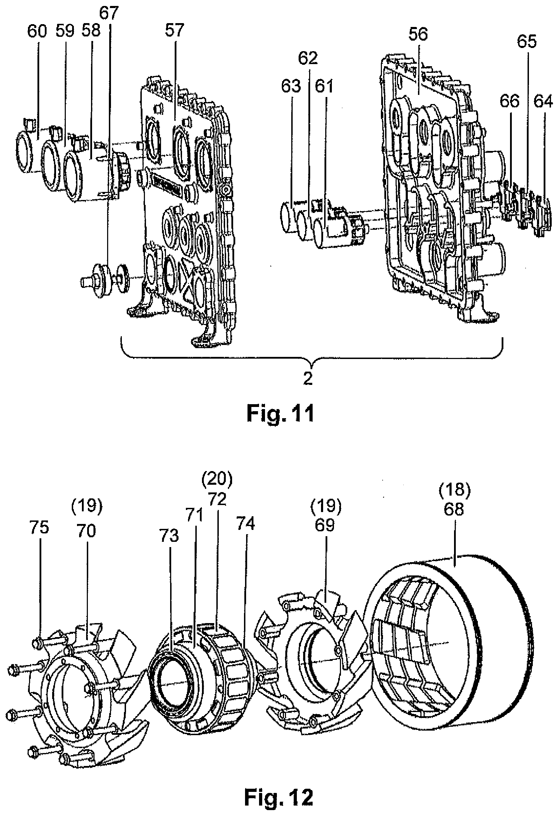

Erfinderisch ist auch denkbar, statt der bevorzugten axialen Ausführung in einer radialen Ausführung (Fig. 12 Pos. 68 - 75) herzustellen. Nachteilig ist in der radialen Ausführung der höhere Herstellungsaufwand zu sehen. Das Funktionsprinzip unterscheidet nicht zur axialen Ausführung.

Die Erfindung macht sich auch die thermische Wirkung der Erregerspule (Fig. 4 Pos. 29) zu Nutze und leitet die Wärmeenergie über den Kühlkreislauf der Spule in das System mit ein.

Gleichstromspulen sind ohm'sche Widerstände die, die eingebrachte elektrische Energie zu 100% in thermische Energie umwandeln.

Um die Wärme effizient über das Wärmeträgermedium aus den Wärmequellen (Temperaturquellen) Induktionsring und Polrad abzuführen, sieht die Erfindung z.B. eine Pumpe (Fig. 3 Pos. 24) vor. Die Pumpe ist bevorzugt als G-Rotorpumpe ausgebildet, ein inneres Pumpenrad wird direkt mit einem Adaptermitnehmer (Fig. 2 Pos. 15) über die Achse des Polrades angetrieben.

Als Wärmeträgermedium im Wärmekreis Heizgerät/Wärmetauscher (Fig. 2 Pos. 11 - 13) eignet sich bevorzugt standardisiertes und bevorzugt temperaturstabiles Hochtemperaturöl. Auch jede andere schmierfähige Flüssigkeit ist denkbar. Öl hat den Vorteil, dass die Schmierung von Lagerung und Pumpe nicht separat ausgeführt sein muss und keine Abdichtung vom Öl zum Wasser erforderlich ist. Zudem weist Öl einen wesentlich höheren Siedepunkt als Wasser auf. Der hohe Siedepunkt des Öls lässt im Wärmekreis hohe Temperaturen zu und deshalb entsteht kein Überdruck. Das erspart vorteilhaft kostspielige Überdruckmaßnahmen. Erfinderisch ist auch denkbar, bei entsprechender Auslegung der Bauteile und Abdichtmaßnahmen gegen Überdruck das Wärmeträgermedium mit niedrigerem Siedepunkt z. B. Wasser einzusetzen.

Außerdem sieht die Erfindung Temperaturkaskaden im Heizsystem vor. Das Heizgerät bildet eine Kaskade 1 mit möglicher Öltemperatur bis 250°C, Wärmetauscher und Mischbox bilden eine Kaskade 2 mit möglicher Wassertemperatur bis 99°C, der eigentliche Heizkreis bildet eine Kaskade 3 mit üblicher Wassertemperatur von 30 - 60°C. Dem liegt zugrunde, dass zum Erzeugen der Übertemperaturen nicht mehr Energie, abzüglich höherer Wärmeabstrahlenergie, aufgewendet werden muss, als bei derzeitiger üblicher Umlauftemperaturen von max. 60°C. Die Kaskadentechnik steigert zusätzlich die Energieeffizienz.

Die Übertragung der Wärme vom Hochtemperaturöl in der ersten Kaskade zu einem anderen Medium, z. B. Wasser in der zweiten Kaskade, erfolgt über einen üblichen Wärmetauscher und hierzu ist insbesondere auch ein ÖI-Wassertrenner 13 vorgesehen, so dass die verschiedenen Wärmemedienkreise keine stoffliche Verbindung miteinander aufweisen und somit die Wärmemedien sich nicht miteinander vermischen können.

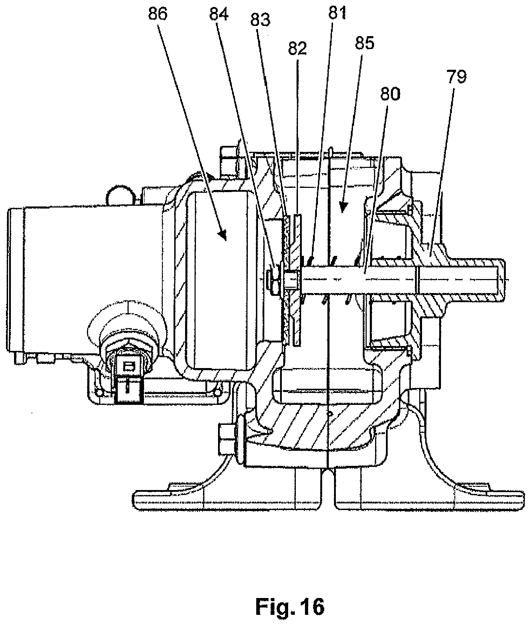

Aus Sicht der Wärmeabstrahlungsverluste bei offener Verrohrung, wo auch Wassermischer und Umwälzpumpen in offener Bauweise ausgeführt sind, sieht die Erfindung eine kompaktere Bauweise in Form einer Mischbox (Fig. 11 Pos. 56 und 57) vor. Die Warm/Kaltwasser-Mischvorrichtung (Fig. 11 Pos. 61 - 63 und 64 - 66) und ebenso die Umwälzpumpen (Fig. 11 Pos. 58 - 60) bilden eine Einheit. Im Gegensatz zur offenen Verrohrung lässt sich so eine Bauweise wesentlich effizienter gegen hohe Wärmeabstrahlung schützen. Die kompakte Bauweise der Mischbox setzt gegenüber herkömmlicher Installation die Voraussetzung, dass der Wasserrücklauf aus den Heizkreisen zum Warmwasser in Kaskade 2 mittels Rückschlagventil geregelt ist (Fig. 16 Pos. 79 - 86). Das Rückschlagventil verhindert, dass sich Kaltwasser aus dem Rücklauf nicht mit Warmwasser aus dem Wärmetauscherreservoir direkt vermischen kann, sondern über die Mischeinrichtung fließt.

Die Abdeckhaube (Fig. 1 Pos. 8) mit wärmedämmender Auskleidung verringert zusätzlich die thermische Abstrahlung der erfindungsgemäßen Heizeinrichtung.

Die Erfindung stützt sich auf die Tatsache, dass externe elektrische und kinetische Energie permanent zugeführt werden muss. Als elektrisch- kinetische Energiezuführung dient bevorzugt ein herkömmlicher Elektromotor (Fig. 2 Pos. 14). Es ist auch denkbar, jede andere Form zur externen kinetischen Energiezuführung, z. B. Verbrennungsmotor, zu wählen. Der Motor beschleunigt das Polrad auf eine vorbestimmte (wirkungsvolle) Drehzahl, bevorzugt sind 3000 U/min. Hauptaufgabe des Motors ist, die kinetische Differenzenergie zwischen Bremsen und Antreiben permanent einzubringen. Neigt der Energieüberhang Richtung Bremsen ist der Motor aktiv, neigt der Energieüberhang Richtung Antreiben ist der Motor inaktiv.

Der Motor ist vorzugshalber flüssigkeitsgekühlt und der Kühlkreislauf des Motors ist z. B. in den Heizkreis eingebunden. Somit lässt sich auch diese Verlustenergie für das Heizsystem nutzen.

Als elektromagnetische Energiezuführung ist Gleichstrom vorgesehen. Beide, Elektromotor und Gleichstromspule benutzen als Quelle bevorzugt eine übliche Stromversorgung. Die Herkunft der Energiequelle ist nicht Gegenstand der Erfindung. Bevorzugt ist aber eine regenerative Energiequelle.

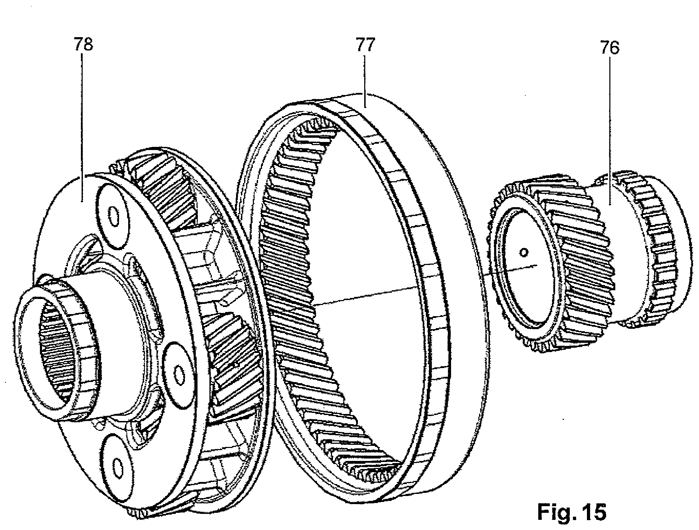

3000 U/min ist eine bevorzugte Drehzahl, die sich aus 2 poligen Elektromotoren bei 50 Hz Netzfrequenz ohne Regelmaßnahmen ergibt. Erfinderisch ist auch denkbar die Drehzahl z. B. mittels Umrichtersteuerung zu erhöhen oder zu senken. Betrifft es die Drehzahlabsenkung, stellt dass kein energetisches Problem dar, weil Ummagnetisierungsverluste im Elektromotor durch reduzieren der Frequenz abnimmt und dadurch dem System zugutekommt. Wird die Drehzahl erhöht, sind mechanische Maßnahmen vorteilhafter. Bei Erhöhung der Drehzahl mittels Frequenzwandlung eines Umrichters steigen Ummagnetisierungsverluste und Erregerstrom im Elektromotor. Das bedeutet höherer Energieverbrauch als Energienutzen. Deshalb kann die Erfindung ein mechanisches Getriebe (Fig. 15 Pos. 76 - 78), bevorzugt als Planetengetriebe, vorsehen. Das Getriebe nimmt eingangsseitig die Antriebswelle des Antriebs aus und treibt ausgangsseitig zum Beispiel direkt das Polrad an.

Die Erfindung sieht in der Drehzahlerhöhung eine Steigerung der Heizleistung bei gleicher Baugröße. Anders, wie bei elektrischen Maschinen bedingt, wo durch Erhöhung der Frequenz die Ummagnetisierungsverluste ansteigen und die Energieeffizienz abnimmt, steigt hier die Wirbelstromdichte und damit auch die Wärmeeffizienz.

Es ist auch denkbar, die Effizienz des Heizgeräts mittels selbsterlernender Software zu steigern und dauerhaft darauf einzustellen. Bei herkömmlichen "Heizsystemen", wo fossile oder erneuerbare Energieträger verbrannt werden, kann die Brenntemperatur nur gering bis gar nicht beeinflusst werden. Das gilt ebenso fürWärmepumpen und Solartechnik, auch hier ist die, im Trägermedium Luft, Wasser, Erde und Sonne gespeicherte Energie nicht vom Heizgerät selbst beeinflussbar.

Anders als bei vorhin genannter Systeme verhält sich die Situation gemäß Erfindung. Hier ist sehr wohl bei Eingriff in grundlegende mechanische und physikalische Strukturen eine Steigerung der Energieeffizienz möglich. Beim E-Motor ist die elektrische Primärenergie über Drehzahl und Lastverhalten effektiv beeinflussbar. Ebenso beim Heizgerät, auch da sind Möglichkeiten zur Energieeffizienzsteigerung gegeben. Es ist leicht herauszufinden, bei welcher Drehzahl die Ummagnetisierungsverluste am kleinsten sind, die größte magnetische Eindringtiefe gegeben ist und daraus die beste Wirbelstromausprägung resultiert. In Summe aller Faktoren ergibt das eine weitere Verbesserung der Energieeffizienz.

Der Wirkungsgrad der erfindungsgemäßen Rotations-Induktionsheizung mit Gleichstromerreger liegt bei maximal 98%, einige wenige Konvektionsverluste sind unvermeidbar.

Die Erfindung zielt darauf ab, eine hohe Energieeffizienz (Leistungszahl bzw. JAZ - Jahresarbeitszeit) >10 zu erreichen. Die hohe Leistungszahl stützt sich dabei auf ein im Eisen charakterisiertes magnetisches Potential (Vektorpotential intB x Hdiv bzw. intH x Bdiv) aus der Gleichstromerregung, dass im System in Form von Magnetkraft F=F_{E}+F_{B} in kinetische Energie umgewandelt wird. Dazu kommt kinetische Energie aus dem Antrieb, um das Polrad am Laufen zu halten.

Beides zusammen ergibt kinetische Energie abzüglich der Antriebsverluste.

Diese kinetische Energie teilt sich wiederum in Antriebe- und Bremsenergie auf. Daraus ergibt sich ein Delta (unterschiedlich), aus dem sich die Größen der externen einzubringenden Energie (bzw. Leistung) errechnet.

Damit das System bestmöglich ausgeführt werden kann, spielt der Magnetwertstoff, das magnetische Gleichfeld und die Umwandlung eines magnetischen Gleichfeldes ein magnetisches Wechselfeld mittels der mechanischen Vorrichtung die wesentliche Rolle.

Aus der hohen magnetischen Sättigung mittels geringer magnetischer Feldstärke resultiert eine schmale Hystereserkurve. Die schmale Hystereserkurve bedeutet, dass das magnetische Potential klein ist. Umgekehrt, je höher das magnetische Potential, umso höher auch die einzubringende externe Erregerleistung (Strom x Spannung) und in der Folge eine Minderung der Leistungszeit.

Ebenso verursacht hohes magnetisches Potential auch hohe Hystereseverluste (Ummagnetisierungsverluste), die nachteilig im System die Wirbelstromausprägung im Induktionsring reduzieren, aber vorteilhaft im System nur geringe Auswirkungen haben.

Die Wirbelstromdichte bestimmt laut ohm'schen Gesetz die thermische Leistungsdichte.

Hierzu einige Beispiel: mit Reineisen eine Leistungszahl >10 erreichbar. Trafoblech bzw. Stahlguss ist eine Leistungszahl von max. 1,5 erreichbar, mit legiertem Stahlblech eine Leistungszahl von max. 1,3 erreichbar.

Die magnetische Wertigkeit von Reineisen zu herkömmlichen Magnetwerkstoffen:
Für Reineisen ist bei 1,6 T (Tesla) circa 10 A/m erforderlich, für Trafobleche und Stahlguss bei 1,6 Tesla sind 4000 A/m erforderlich, für legiertes Stahlblech bei 1,6 Tesla sind 6000 A/m erforderlich, für Gusseisen bei 1,2 Tesla sind 21000 A/m erforderlich.

Die Aufstellung macht deutlich, um wieviel mehr Erregerleistung notwendig ist, um auf die magnetische Flussdichte von 1,6 T /Tesla) zu kommen, bei gleicher Windungszahl.

Reineisen hat, wie erwähnt, einen sehr hohen Sättigungsgrad (2,5 T zu 1,7 T bei Trafoblech), eine schmale Hystereserkurve und ein geringes magnetisches Potential. Daraus ergibt sich der Rückschluss über das Reineisen nur mittels Gleichfeld magnetisiert werden kann, weil sich mit dem Wechselfeld nach dem Induktionsgesetz eine fast äquivalente Gegeninduktion zur Induktion einstellt. Es fließt also ein geringer Erregerstrom und das Magnetfeld verliert gravierend an Wertigkeit.

Wird das magnetische Wechselfeld über ein mechanisches Bauteil erzeugt, unterliegt die Spule keiner Induktion/Gegeninduktion. Im Gegensatz dazu lassen die geringen Ummagnetisierungsverluste eine hohe Wirbelstromausprägung zu und daraus resultierend die hohe thermische Leistung.

Eine ebenso wichtige Rolle spielen die Geometrie von Polrad und Induktionsrinq. Diese bestimmt, in welchem Verhältnis Antrieb zum Bremsen steht. Weil daraus einzig das Delta aufzubringende kinetische Energie bestimmt, ist es wichtig, ein möglich kleines Delta zu erzielen. Die Höhe der inneren kinetischen Energie, resultierend aus der Magnetkraft, hat keinen Einfluss auf die Leistungszahl und ist auch in diesem Fall irrelevant. Einzig die Wirbelströme bestimmen die thermische Energie und nicht die kinetische Energie. Ebenso bestimmen die Wirbelströme aufgrund der vektorischen Unterordnung in der Geometrie auch die potentielle Energieaus dem magnetischen Moment (Eₚₒₜ = -m x B = -m B cos Θ)

Das heißt, es lässt sich kein direkterZusammenhang zwischen magnetischen Moment und Drehmoment erkennen. Diese Freiheit ist auch so gewollt, denn sie bestimmt die Höhe der Leistungseffizienz.

Reineisen als idealer Magnetwerkstoff zeichnet sich besonders dadurch aus, dass die magnetische Sättigung und die Permeabilität sehr hoch sind. Es gibt auch noch andere hochfrequente Magnetwerkstoff, die dem Reineisen sehr nahe kommen. Deshalb umfasst die Begriffe Reineisen, gemäß der vorliegenden Anmeldung, auch solche Werkstoffe, die eine magnetische Sättigung von > 1,5T und einer Anfangspermeabilität ÜA > 6000 aufweisen.

Figur 12 zeigt eine alternative Ausbildung des Induktionsringes, allerdings nicht wie bisher mit einem axialen Magnetfluss (siehe Figur 10), sondern einem radialen Magnetfluss.

Dabei weißt der Induktionsring 68 eine hintere Klauenpolläuferhälfte 69 und damit verschraubbare vordere Klauenpolläuferhälfte 70 auf, die das Polrad bilden und die wiederum einen Polkern 71 mit einer Erregerspule 72, einem Loslager 73 und einem Stützlager 74 aufnehmen und somit einen Magnetring mit Gleichstromspule bilden.

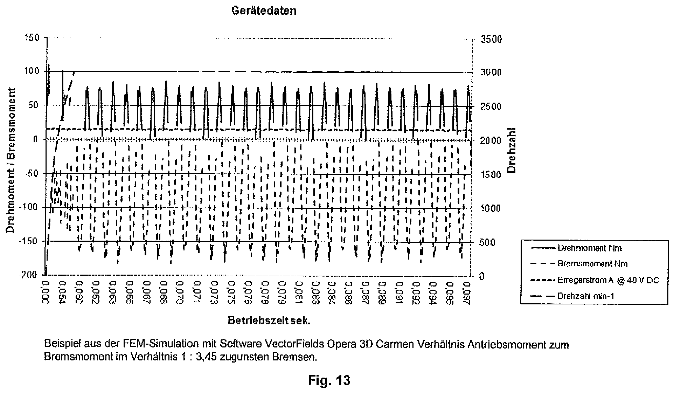

Figur 13 zeigt ein Beispiel eines Drehmoment-/Bremsmoment-Breitdiagramms, in dem Verlauf des Drehmoments, des Bremsmoments, des Erregerstroms (der Gleichstromspule), sowie der Drehzahl aufgezeigt ist.

Zum Beispiel ist das Verhältnis von Antriebsmoment zum Bremsmoment etwa 1 zu 3,45 zu Gunsten des Bremsens.

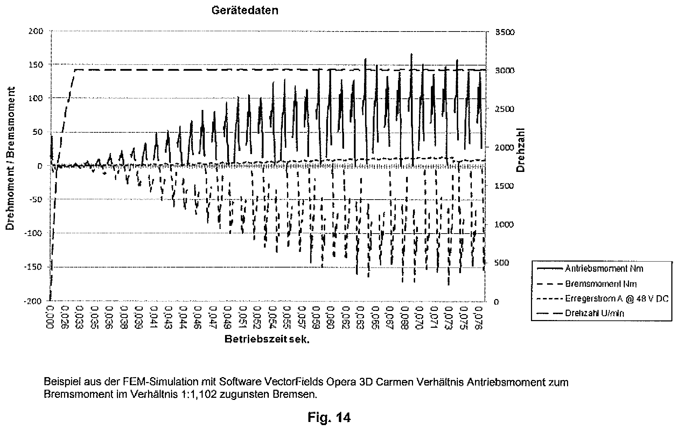

Ein Beispiel gemäß Figur 14 ist eine Änderung des Verhältnisses von Antriebsmoment zum Bremsmoment im Verhältnis von 1 zu 1,102 zu Gunsten des Bremsens.

Erkennbar kann also durch das Verschieben der Verhältnisse des Antriebsmoments zum Bremsmoment ganz erheblich die Steuerung der Einrichtung und somit auch in die Erzeugung der Heizleistung eingegriffen werden.

Wie vorstehend ausgeführt, zeichnet sich das erfindungsgemäße Heizgerät durch einen mehrteiligen Aufbau von axial sich hintereinander anordnenden Bauteilen, nämlich Magnetring mit Gleichstromspule, Polrad und Induktionsring aus, wobei Magnetring und Induktionsring fest stehend ausgebildet sind, während das Polrad rotierbar ausgebildet ist und somit zwischen dem Magnetring mit dem Polrad ein magnetisches Gleichfeld ausgebildet wird, während zwischen dem Polrad und dem Induktionsring ein magnetisches Wechselfeld ausgebildet wird.

### Bezuqszeichen

- 1: Heizgerät mit Wärmetauscher
- 2: Mischbox für Warm/Kaltwasseraufbereitung
- 3: Grundrahmen
- 4: Wärme- und Schalldämmmatte
- 5: Steuerelektronik
- 6: Rückwand
- 7: Wärme- und Schalldämmmatte für Rückwand
- 8: Wärme- und Schalldämmhaube
- 9: Anzeige und Bedienelement
- 10: Heizgerät
- 11: oberes Wärmetauschergehäuse
- 12: unteres Wärmetauschergehäuse
- 13: ÖI-Wassertrenner
- 14: Startmotor
- 15: Kupplung Heizgerät - Startmotor
- 16: Regler ÖI- Einspritzvolumen
- 17: Gehäuse Heizgerät
- 18: Induktionsring
- 19: Polrad
- 20: Magnetring mit Gleichstromspule
- 21: Stützlagernabe
- 22: Stützlager
- 23: Spannmutter Stützlager
- 24: Ölpumpe
- 25: Führungslager
- 26: Spannmutter Führungslager
- 27: Frontdeckel
- 28: Magnetring
- 29: Gleichstromspule
- 30: Polringträger mit Lagerstummel
- 31: äußerer Polring
- 32: innerer Polring
- 33: Polrad
- 34: Sonnenrad Planetengetriebe
- 35: Aufnahmestummel Führungslager
- 36: Magnetkörper Induktionsring
- 37: Füllkörper Induktionsring (unmagnetisch)
- 38: Vertiefung zur Magnetfeldunterbrechung
- 39: integrierte Scheibe aus elektrischen- wärmeleitenden Werkstoff
- 40: Rillenprofilierung zur Vergrößerung der Konvektionsfläche
- 41: Vertiefung im Induktionsring
- 42: Polfortsatz an Polring innen erhaben
- 43: Polfortsätze an Polring außen erhaben
- 44: Magnetfeld- Austrittsfläche am Magnetring (Gleichfeld)
- 45: Magnetfeld- Eintrittsfläche am Magnetring (Gleichfeld)
- 46: Magnetfeld- Eintrittsfläche am Polrad (Gleichfeld)
- 47: Magnetfeld- Austrittsfläche am Polrad (Gleichfeld)
- 48: Magnetfeld- Austrittsfläche am Polrad- Außenring (Wechselfeld)
- 49: Magnetfeld- Austrittsfläche am Polrad- Innenring (Wechselfeld)
- 50: Magnetfeld- Eintrittsfläche am Induktionsring (Wechselfeld)
- 51: magnetische Gleichfeldzone
- 52: magnetische Wechselfeldzone
- 53: Magnetring statische Anordnung
- 54: Induktionsring statische Anordnung
- 55: Polrad dynamische Anordnung
- 56: vorderes Mischboxgehäuse
- 57: hinteres Mischboxgehäuse
- 58: Umwälzpumpe Heizkreis 1
- 59: Umwälzpumpe Heizkreis 2
- 60: Umwälzpumpe Boiler
- 61: Mischkolben Heizkreis 1
- 62: Mischkolben Heizkreis 2
- 63: Mischkolben Heizkreis Boiler
- 64: Stellmotor Mischkolben Heizkreis 1
- 65: Stellmotor Mischkolben Heizkreis 2
- 66: Stellmotor Mischkolben Heizkreis Boiler
- 67: Rückschlagventil Wassermischer
- 68: Induktionsring
- 69: hintere Klauenpolläuferhälfte
- 70: vordere Klauenpolläuferhälfte
- 71: Polkern
- 72: Erregerspule
- 73: Loslager
- 74: Stützlager
- 75: Schrauben Klauenpolläufer
- 76: Sonnenrad
- 77: Hohlrad
- 78: Planetenradsatz
- 79: Ventilverschraubung
- 80: Ventilkolben
- 81: Ventilfeder
- 82: Druckscheibe
- 83: Dichtung
- 84: Spannmutter
- 85: Kaskade 3 Kaltwasser vom Rücklauf aus Heizkreis 1 und 2
- 86: Kaskade 2 Warmwasserreservoir
- 87: Nut im Magnetring
- 88: Blechband
- 89: Stromversorgungsanschluss für Gleichstromspule
- 90: Öffnung im Magnetring

## Patentansprüche

1. Rotations- Induktionsheizung mit Gleichstromerregung zum Erwärmen von festen oder flüssigen oder gasförmigen Stoffen, **dadurch gekennzeichnet, dass** ein mit einer Gleichstromspule (29) ein magnetisches Gleichfeld erzeugt wird und dieses magnetische Gleichfeld über ein rotierendes mechanisches Bauteil (19, 30-32) in ein magnetisches Wechselfeld umgewandelt wird, wobei die Rotations-Induktionsheizung einen Magnetring (28) mit einer Gleichstromspule zur Erzeugung des magnetischen Gleichfeldes aufweist, wobei der Magnetring (28) fest stehend mit dem Gehäuse (17) der Rotations- Induktionsheizung verbunden ist, wobei sich an den Magnetring (28) in axialer Richtung ein rotierbares Polrad (19) anschließt, wobei das Polrad (19) einen inneren Polring (32) und einen äußeren Polring (31) aufweist, und dass in axialer Richtung sich an das Polrad (19) ein fest stehendes Bauteil, nämlich ein Induktionsring (18) anschließt und wobei zwischen dem Magnetring (28) und dem Polrad (19) das magnetisches Gleichfeld ausgebildet und zwischen Polrad (19) und dem Induktionsring (18) das magnetische Wechselfeld zum Erzeugen von induktiver Wärme ausgebildet ist.

2. Rotations- Induktionsheizung mit Gleichstromerregung nach Anspruch 1, **dadurch gekennzeichnet, dass** die Gleichstromspule (29) von dem Magnetring (28) aufgenommen und hiermit vorzugsweise fest verbunden ist, wobei der Magnetring (28) fest stehend mit dem Gehäuse (17) der Rotations- Induktionsheizung verbunden ist.

3. Rotations- Induktionsheizung nach Anspruch 2, **dadurch gekennzeichnet, dass** das von der Gleichstromspule (29) erzeugte magnetische Gleichfeld über ein rotierendes mechanisches Teil, nämlich ein Polrad (32) in ein magnetisches Wechselfeld umgewandelt wird.

4. Rotations- Induktionsheizung mit Gleichstromerregung nach einem der vorhergehenden Ansprüche, **dadurch gekennzeichnet, dass** zur Transformation des magnetischen Gleichfeldes in ein magnetisches Wechselfeld mittels mechanischen Bauteil kietische Energie erforderlich ist und sich die kinetische Gesamtenergie in Antriebsenergie und Bremsenergie aufteilt, wobei vorzugsweise die kinetische Gesamtenergie in elektrische Energie in Form von Wirbelströmen umgewandelt wird und vorzugsweise elektrische Energie in Wirbelströmen vollständig oder soweit wie möglich in Wärme umgewandelt wird.

5. Rotations- Induktionsheizung mit Gleichstromerregung nach Anspruch 1 bis 4 **dadurch gekennzeichnet, dass** die Wärme primär im Induktionsring (18) und sekundär im Polrad (19, 33) entsteht.

6. Rotations- Induktionsheizung mit Gleichstromerregung nach Anspruch 5 **dadurch gekennzeichnet, dass** die Wärme vom Induktionsring (18) und Polrad (19, 33) in flüssige oder gasförmige Stoffe transferiert wird.

7. Rotations- Induktionsheizung mit Gleichstromerregung nach vorheriger Ansprüche **dadurch gekennzeichnet, dass** die kinetische Differenzenergie zum Aufrechterhalten der Rotation des Polrades (19, 33) mittels eines externen Antrieb, bevorzugt ein Elektromotor, aufgebracht wird.

8. Rotations- Induktionsheizung mit Gleichstromerregung nach Anspruch 7 **dadurch gekennzeichnet, dass** die Wärme in wenigstens einer Kaskade (11-13), bevorzugt sind drei, vom heißeren Bereich in den kälteren Bereich übertragen wird, wobei vorzugsweise die Kaskadentechnik die Energieeffizienz steigert.

9. Rotations- Induktionsheizung mit Gleichstromerregung nach Anspruch 8 **dadurch gekennzeichnet, dass** in Kaskade Eins Hochtemperaturöl als Wärmeträgermedium bevorzugt eingesetzt ist und vorzugsweise die Erwärmung, bis auf 250°C ohne Dampfbildung möglich ist.

10. Rotations- Induktionsheizung mit Gleichstromerregung nach Anspruch 8 - 9 **dadurch gekennzeichnet, dass** die Wärmeträgermedien in Kaskade Eins und Kaskade Zwei durch einen Bauteil (13) z. B. ÖI-Wassertrenneinrichtung aus einem, dem System am besten dienenden wärmeleitenden Material, dass eventuell als guter oder schlechter Wärmeleiter ausgeführt sein kann, voneinander räumlich getrennt sind.

11. Rotations- Induktionsheizung mit Gleichstromerregung nach vorheriger Ansprüche **dadurch gekennzeichnet, dass** die Warm- Kaltwassermischeinrichtung mit den Umwälzpumpen und die Warm- Kaltwasser- Mischvorrichtung aus Wärmeabstrahlungsgründen in das Heizsystem integriert ist.

12. Rotations- Induktionsheizung mit Gleichstromerregung nach vorheriger Ansprüche **dadurch gekennzeichnet, dass** ein Rückschlagventil die Vermischung von Warmwasser aus dem Reservoir in Kaskade Zwei und Kaltwasser aus dem Rücklauf von Kaskade Drei verhindert und die Warm- Kaltwassermischung über die eigentliche Mischvorrichtung erfolgt.

13. Rotations- Induktionsheizung mit Gleichstromerregung nach vorheriger Ansprüche **dadurch gekennzeichnet, dass** durch ein Steuerelement der elektronischen Steuerung und durch eine Software eine Selbsterlernung zum Modifizieren von Steuerungsabläufen eine Verbesserung der Energieeffizienz erreicht.

14. Rotations- Induktionsheizung mit Gleichstromerregung nach Anspruch 1- 7 **dadurch gekennzeichnet, dass** die mechanisch- magnetische Ausführung (Fig. 12 Pos. 68-75) nicht achsbezogen ist und der magnetische Fluss entweder radial oder axial ausgerichtet sein kann.

15. Rotations-Induktionsheizung mit Gleichstromerregung nach einem der vorhergehenden Ansprüche, wobei die Rotations-Induktionsheizung ein Heizgerät aufweist, welches einen Magnetring einer Gleichstromspule (29) zur Erzeugung eines magnetischen Gleichfeldes aufweist, wobei sich an dem Magnetring (28) in axialer Richtung ein rotierbares Polrad (19) anschließt, wobei das Polrad (19) vorzugsweise einen inneren Polring (32) und/oder einen äußeren Polring (31) aufweist, welcher aus einem magnetischen Material, nämlich Reineisen oder einem anderen Material mit derselben Wertigkeit bzw. geringem Unterschied, als Füllmaterial besteht und das in axialer Richtung sich an das Polrad (19) ein fest stehendes, also statisches mechanisches Bauteil, nämlich ein Induktionsring (18) anschließt, wobei zwischen dem Magnetring (28) und dem Polrad (19) ein magnetisches Gleichfeld ausgebildet ist und zwischen dem Polrad (19) und dem Induktionsring (18) ein magnetisches Wechselfeld ausgebildet ist und/oder, wobei das statische mechanische Bauteil einen Induktionsring (18) aufweist, welcher Vertiefungen (38) aufweist, welche aus einem ferromagnetischem Material, nämlich Reineisen oder ein anderes Material mit derselben Wertigkeit bzw. geringem Unterschied, als Vollmaterial bestehen.
